# FASCICULE DE BREVET EUROPEEN

(11) **EP 3 030 406 B1**
(45) Date de publication et mention de la délivrance du brevet: **20.11.2019**
(21) Numéro de dépôt: 14750001.1
(22) Date de dépôt: 26.06.2014
(51) Int. Cl.: B29D 30/06, B29C 33/30, B29C 33/42

(54) **MOULE POUR PNEUMATIQUE COMPORTANT UN INSERT ANNULAIRE POUR MOULER UNE SCULPTURE**
REIFENFORM MIT EINEM RINGFÖRMIGEN EINSATZSTÜCK ZUM FORMEN EINES PROFILS
TYRE MOULD COMPRISING AN ANNULAR INSERT FOR MOULDING A PROFILE

(30) Priorité: 05.08.2013 FR 1301880
(43) Date de publication de la demande: 15.06.2016
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR); GOMET, Christian, F-63040 Clermont-Ferrand Cedex 9 (FR)
(74) Mandataire: Demaure, Pierre-Yves
(86) Numéro de dépôt international: PCT/IB2014/001206
(87) Numéro de publication internationale: WO 2015/019135

(56) Documents cités:
- WO-A1-2004/041499
- DE-A1- 10 357 627
- DE-A1-102004 052 766
- DE-A1-102007 005 455
- GB-A- 588 170
- US-A- 1 632 310
- US-A- 3 562 861
- US-A- 5 643 519
- US-A1- 2004 032 053
- US-B1- 6 955 782
- US-B1- 8 177 538

## Description

### DOMAINE TECHNIQUE DE L'INVENTION

La présente invention concerne les moules pour pneumatiques. Plus particulièrement, elle se rapporte au moulage des éléments de formes diverses sur les flancs de ces pneumatiques.

### ETAT DE LA TECHNIQUE ANTERIEURE

Il est connu que les flancs des pneumatiques comportent un grand nombre de marquages, tels que la marque du fabriquant, le type de pneumatique, les dimensions du pneumatique etc. Ces marquages sont obtenus en prévoyant sur le moule, et plus particulièrement sur des parties latérales de ce moule dites « coquilles », des moyens aptes à mouler ces marquages, appelés ci-après « moyens de marquage ». Les coquilles sont des pièces de révolution, généralement en acier, et les motifs ou marquages à reproduire sur les pneus sont réalisés par usinage, par exemple par gravure ou fraisage. Lorsque ces pièces présentent des difficultés de réalisation par des moyens d'usinage conventionnels tels que le tournage ou le fraisage, il est possible de les obtenir en utilisant des pièces en aluminium obtenues par fonderie. Il est alors possible de mettre en œuvre une vaste panoplie de motifs à imprimer.

On connaît aussi des pneumatiques dans lesquels les flancs sont utilisés pour apposer des éléments de sculpture. Par exemple, le document EP 1 560 688 décrit un moule pour pneumatique comprenant plusieurs secteurs de bande de roulement pour former la bande de roulement, un dos de moule soutenant les secteurs de moule, des coquilles de moulage pour les parois latérales, les coquilles étant produites à partir d'un unique modèle de coulée. Ce moule est utilisé pour produire des pneumatiques comportant des éléments de sculptures s'étendant de la bande de roulement vers les flancs. Ce type de conception ne permet toutefois pas de produire certains types de sculptures complexes. Tout changement dans le design des sculptures implique un changement intégral de moule, impliquant des frais importants.

Or, en fonction du type de pneumatique à produire, il peut être nécessaire de faire évoluer les motifs initialement prévus.

Le document US4547139 divulgue l'utilisation de plaquettes amovibles placées dans une coquille d'un moule. Ces plaquettes comportent des moyens de marquage comprenant des indications qu'il faut changer régulièrement, comme par exemple la période de fabrication du pneumatique. Cependant, la taille de la plaquette étant relativement petite, la surface des éléments qu'elle peut contenir est limitée. Il n'est donc pas possible d'intégrer une surface significative d'éléments de sculpture sur les flancs. En outre, la fixation de la plaquette dans le moule est complexe.

Le document JP61019314 divulgue l'utilisation d'un insert amovible se présentant sous la forme d'une pièce monobloc annulaire. Plus particulièrement, cet insert annulaire est logé dans une rainure s'étendant dans une coquille du moule. Cet insert présente alors un diamètre relativement important, ce qui nécessite une grande précision dans sa réalisation afin que celui-ci s'adapte de manière satisfaisante à la rainure, et ceci sur toute la circonférence de cette rainure.

Le document US1632310 divulgue un moule pour la vulcanisation et le moulage d'un pneumatique constitué d'une pluralité de sections interchangeables permettant de mouler le flanc ou une autre partie du pneumatique. Chaque section contient des cavités de moulage formant différentes lettres ou signes qui, lorsque les sections sont agencées d'une certaine manière, permettent le moulage d'une suite de motifs ayant une signification et permettant d'identifier les pneumatiques sur lesquels ils son moulés.
Les documents US6955782 et DE102007005455 décrivent un moule comportant un élément annulaire radialement étendu comportant des caractéristiques de surface de moulage du flanc du pneumatique.
Le document US8177538 décrit un moule comportant les caractéristiques du préambule de la revendication 1.

Il existe donc un besoin de proposer une solution de remplacement de moyens de moulage des motifs de sculpture s'étendant sur les flancs d'un pneumatique qui permet de proposer une surface de moulage suffisante, tout en étant plus simple et plus pratique à réaliser que dans l'art antérieur.

### EXPOSE DE L'INVENTION

Un premier objet de l'invention consiste à prévoir un moule spécifiquement adapté pour le moulage de pneumatiques présentant des éléments de sculpture s'étendant sur les flancs.

Un autre objet de l'invention consiste à prévoir un moule pour pneumatique dont les motifs de flancs sont réalisés avec un très haut niveau de précision.

Pour ce faire, l'invention prévoit un moule pour la vulcanisation et le moulage d'un pneumatique selon la revendication 1.

Selon un mode de réalisation avantageux, les caractéristiques de surface de moulage du pneumatique sont positionnées sensiblement à la jonction de la coquille et de la couronne du moule.

Selon un autre mode de réalisation, les caractéristiques de surface de moulage du pneumatique sont situés à une position sensiblement radialement intérieure de la coquille du moule.

Selon encore un autre mode de réalisation, les caractéristiques de surface de moulage du pneumatique sont positionnées sensiblement sur toute la longueur de la coquille du moule.

De manière préférentielle, l'insert est formé de plusieurs parties d'insert positionnées les unes à la suite des autres dans la rainure annulaire. Ce mode de réalisation offre une grande souplesse. L'invention propose ainsi de fabriquer un insert annulaire en plusieurs parties en vue de faciliter sa réalisation. En outre, comme chaque partie d'insert présente des dimensions limitées, leur ajustement à la rainure dans la coquille est facilité. De plus, en cas de modifications des caractéristiques de sculptures sur le flanc du pneumatique, seules les parties d'insert comprenant les zones concernées par ces modifications sont remplacées. Il n'est donc pas nécessaire de remplacer l'ensemble de l'insert. Cet aspect de l'invention permet par exemple de prévoir au moins deux parties d'insert avec des dimensions différentes.

Avantageusement, chaque partie d'insert comporte des surfaces pour le contact avec des parties d'insert adjacentes. Ainsi, au moins deux parties d'insert sont reliées entre elles au niveau d'une zone de leur surface de contact, cette liaison étant apte à être brisée en vue de désolidariser les deux parties d'insert. En liant tout ou partie des différentes parties d'insert entre elles, il est possible de positionner en une seule fois l'ensemble de l'insert annulaire dans le moule.

Lors d'une opération de changement d'une des parties d'insert, il suffit alors de briser les liaisons la retenant aux autres parties d'insert pour l'extraire du moule et la remplacer par une autre partie d'insert idoine.

En variante, le moule présentant un plan équatorial, une partie d'insert est décalée par rapport à une autre partie d'insert adjacente en direction du plan équatorial du moule. On peut ainsi prévoir une grande diversité de sculptures.

Dans une variante avantageuse, chaque partie d'insert comporte une surface de moulage apte à être en contact avec le pneumatique, et au moins deux parties d'insert présentent des caractéristiques de surface de moulage différentes.

Selon un mode de réalisation avantageux, au moins une partie d'insert est réalisée par frittage laser, ladite partie d'insert comportant tout ou partie des éléments de sculpture de l'insert. Le procédé du frittage laser est un procédé qui consiste à construire une pièce couche par couche en superposant successivement des couches de poudre et en fusionnant sélectivement cette poudre. Ce procédé peut être assisté par ordinateur ce qui permet de construire des pièces assez complexes. En utilisant ce procédé de frittage pour réaliser de parties d'insert, il est possible de former sur ces parties d'insert des agencements de sculptures complexes permettant d'améliorer les caractéristiques esthétiques et/ou opérationnelles du pneumatique.

Dans un autre mode de réalisation, au moins une partie d'insert est réalisée en fonte d'aluminium.

Dans une variante avantageuse, la coquille comprend une ouverture traversante s'étendant entre l'insert et l'extérieur de la coquille.

Dans un autre mode de réalisation, la coquille comprend une ouverture traversante, comme par exemple un alésage, s'étendant entre l'insert et l'extérieur de la coquille. Ce type d'agencement permet d'introduire un moyen pour faire sortir la coquille lorsque celle-ci est fixée à force dans la rainure. En variante, plusieurs ouvertures ou alésages sont répartis le long de la circonférence de l'insert, par exemple un par partie d'insert.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1A représente schématiquement une vue en coupe d'un moule pourvu d'un insert annulaire réalisé selon un premier mode de réalisation de l'invention ;
- la figure 1B représente schématiquement une vue en coupe d'un moule pourvu d'un insert annulaire réalisé selon un second mode de réalisation de l'invention ;
- la figure 2 représente schématiquement une vue en perspective d'un exemple d'insert annulaire selon l'invention ;
- la figure 3 représente schématiquement une face d'une partie d'insert de la figure 2 liée à une autre partie d'insert ;
- la figure 4 représente schématiquement une vue en coupe dans un plan méridien d'une partie d'un moule conforme à l'invention montrant une ouverture permettant de conférer un accès à l'insert par l'extérieur du moule.

Dans la description qui va suivre, des éléments sensiblement identiques ou similaires seront désignés par des références identiques.

### DESCRIPTION DETAILLEE DE L'INVENTION

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par-des-surfaces latérales et par deux surfaces principales dont l'une est destinée à entrer en contact avec une chaussée lorsque le pneumatique roule.

Par « flanc» d'un pneumatique, on entend une surface latérale du pneumatique disposée entre la bande de roulement du pneumatique et un bourrelet de ce pneumatique.

Par « sculpture », on entend les agencements surfaciques et volumiques de mélanges caoutchoutiques à la surface externe du pneumatique prévus pour assurer le contact avec la surface de roulage, et dont la forme permet d'ajuster les performances opérationnelles du pneumatique. Les sculptures permettent aussi de conférer un aspect esthétique à la bande de roulement ou autre zone du pneumatique tel que les flancs.

Par « bourrelet » d'un pneumatique, on entend une partie du pneumatique destinée à prendre assise sur une jante de roue.

Par « moule », on entend un ensemble d'éléments de moule séparés qui, par rapprochement relatif, permettent de délimiter un espace de moulage toroïdal pour la vulcanisation et le moulage d'un pneumatique.

Par « plan équatorial », on entend un plan perpendiculaire à un axe de révolution du moule et séparant ce moule en deux 1/2 moules identiques.

Par « plan méridien », on entend un plan contenant l'axe de révolution du moule.

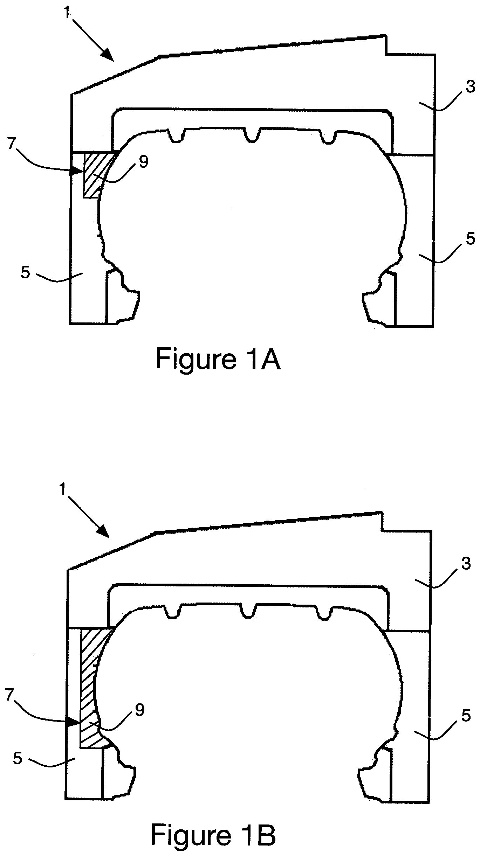

Comme on le voit à la figure 1, le moule 1 comprend une couronne 3 destinée au moulage de la bande de roulement d'un pneumatique et deux coquilles 5 pour le moulage des flancs. Le moule 1 comprend également une rainure annulaire 7 s'étendant le long de la circonférence du flanc, en creux dans une des coquilles 5. Un insert 9, est monté de façon amovible dans la rainure. L'insert 9 comporte des caractéristiques de surface de moulage du pneumatique. Ces éléments de formage/moulage sont prévus de façon à positionner les sculptures sur la zone du flanc du pneumatique à mouler, soit pour conférer un aspect esthétique particulier, et/ou pour fournir des éléments de protection des flancs au pneumatique produit.

Dans l'exemple de réalisation de la figure 1A, les caractéristiques de surface de moulage 11 du pneumatique sont positionnées sensiblement à la jonction de la coquille et de la couronne.

Dans l'exemple de réalisation de la figure 1B, les caractéristiques de surface de moulage 11 du pneumatique sont positionnés sensiblement sur toute la longueur de la coquille.

D'autres positions intermédiaires peuvent aussi être prévues. On peut également prévoir plusieurs inserts à l'une et l'autre de ces positions.

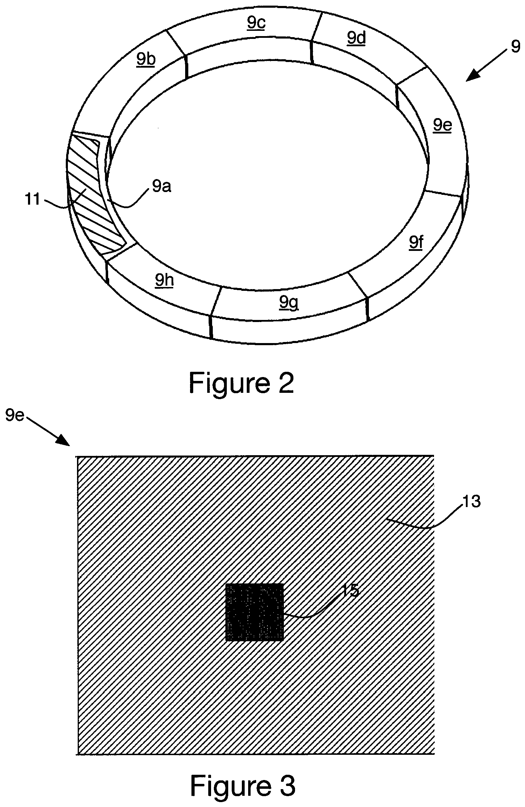

Tel que montré dans l'exemple de réalisation de la figure 2, l'insert peut être formé de plusieurs parties d'insert 9a à 9h alignées angulairement les unes à la suite des autres de façon à former un anneau aux dimensions adaptées pour insertion dans la rainure annulaire 7.

La figure 3 montre une vue en élévation d'une face latérale de la partie d'insert 9e, vu depuis la partie 9f. L'interface entre les deux sections produit une zone de jonction avec une surface de contact 13.

**Un** pont 15, ou élément de jonction, permet de fixer entre elles deux parties voisines de l'insert 9. Dans cet exemple, le pont 15 est prévu dans la zone centrale de surface de contact 13. En variantes, plusieurs ponts peuvent être prévus. Le profil et la surface des ponts peuvent varier selon les modes de réalisation. Les ponts sont avantageusement prévus lors de la fabrication de l'insert, en particulier dans le cas où l'insert est réalisé par frittage laser. Pour changer une partie d'insert, le ou les ponts reliant les parties concernées sont cassés ou coupés. La section des ponts est avantageusement prévue et dimensionnée pour faciliter cette opération. En effet, même si les parties sont séparables par cassure des ponts lorsque l'insert est hors du moule, le montage de l'insert dans le moule, de préférence avec serrage, confère une rigidité suffisante pour pouvoir effectuer les opérations de moulage sans risque de cassure de ponts. Par ailleurs, l'insertion de l'insert dans la rainure de coquille confère un appui solide permettant de bien résister aux efforts de moulage.

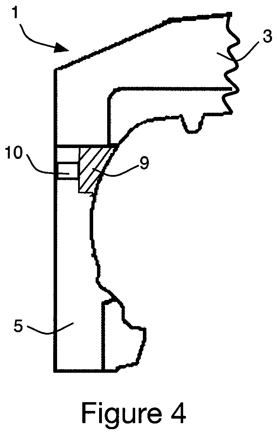

Dans la variante de réalisation présentée à la figure 4, un orifice traversant 10, tel qu'un alésage, assure une communication entre l'extérieur du moule et l'intérieur du moule. Cet orifice permet d'enfoncer un outil de démoulage depuis l'extérieur du moule pour faciliter l'extraction de l'insert, soit en totalité ou pour une ou plusieurs parties d'insert. Plusieurs orifices 10 peuvent être répartis angulairement le long de la circonférence de la coquille.

Selon diverses variantes de réalisation non illustrées, au moins deux parties d'insert ont des dimensions différentes, soit en largeur et/ou en hauteur.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Moule (1) pour la vulcanisation et le moulage d'un pneumatique, ce pneumatique comprenant une bande de roulement délimitée par deux flancs, le moule comprenant une couronne (3) destinée au moulage des sculptures de la bande de roulement du pneumatique et deux coquilles (5) distinctes de la couronne pour le moulage des flancs, le moule comprenant une rainure annulaire (7) s'étendant en creux dans une des coquilles (5) et un insert (9) logé dans la rainure, cet insert (9) comportant des caractéristiques de surface de moulage (11) du pneumatique, lesdites caractéristiques de surface de moulage de l'insert comprennent des éléments de sculptures de pneumatique s'étendant dans le prolongement des sculptures de la bande de roulement, **caractérisé en ce que** l'insert (9) est formé de plusieurs parties d'insert (9a-9h) positionnées les unes à la suite des autres dans la rainure annulaire (7), chaque partie d'insert comportant des surfaces de contact (13) pour le contact avec des parties d'insert adjacentes, et **en ce qu'**au moins deux parties d'insert (9e, 9f) sont reliées entre elles au niveau d'une zone (15) de leur surface de contact, cette liaison étant apte à être brisée en vue de désolidariser les deux parties d'insert (9e, 9f).

2. Moule selon la revendication 1, **caractérisé en ce que** les caractéristiques de surface de moulage (11) du pneumatique sont positionnés sensiblement à la jonction de la coquille et de la couronne.

3. Moule selon la revendication 1, **caractérisé en ce que** les caractéristiques de surface de moulage (11) du pneumatique sont positionnés sensiblement sur toute la longueur de la coquille.

4. Moule selon l'une des revendications 1 à 3, chaque partie d'insert ayant une surface de moulage (10a, 10b) apte à être en contact avec le pneumatique, **caractérisé en ce qu'**au moins deux parties d'insert présentent des caractéristiques de surface de moulage différentes.

5. Moule selon l'une des revendications 1 à 4, **caractérisé en ce qu'**au moins une partie d'insert (9a) est réalisée par frittage laser, ladite partie d'insert comportant tout ou partie des caractéristiques surfaciques de moulage (11) de l'insert (9).

6. Moule selon l'une des revendications 1 à 4, **caractérisé en ce qu'**au moins une partie d'insert (9a) est réalisée en fonte d'aluminium

7. Moule selon l'une quelconque des revendications 1 à 6, **caractérisé en ce que** la coquille (5) comprend une ouverture traversante (10) s'étendant entre l'insert (9) et l'extérieur de la coquille (5).

## Patentansprüche

1. Form (1) zur Vulkanisation und zum Formen eines Reifens, wobei dieser Reifen einen Laufstreifen umfasst, der von zwei Seitenwänden begrenzt wird, wobei die Form einen Ring (3), der zum Formen der Profile des Laufstreifens des Reifens bestimmt ist, und zwei von dem Ring verschiedene Seitenplatten (5) zum Formen der Seitenwände umfasst, wobei die Form eine ringförmige Nut (7), die sich vertieft in einer der Seitenplatten (5) erstreckt, und einen in der Nut aufgenommenen Einsatz (9) umfasst, wobei dieser Einsatz (9) Formflächenmerkmale (11) des Reifens aufweist, wobei die Formflächenmerkmale des Einsatzes Elemente von Reifenprofilen umfassen, die sich in der Verlängerung der Profile des Laufstreifens erstrecken, **dadurch gekennzeichnet, dass** der Einsatz (9) von mehreren Einsatzteilen (9a-9h) gebildet wird, die hintereinander in der ringförmigen Nut (7) positioniert sind, wobei jedes Einsatzteil Kontaktflächen (13) für den Kontakt mit benachbarten Einsatzteilen aufweist, und dadurch, dass wenigstens zwei Einsatzteile (9e, 9f) an einem Bereich (15) ihrer Kontaktfläche miteinander verbunden sind, wobei diese Verbindung zum Trennen der zwei Einsatzteile (9e, 9f) voneinander zerbrechbar ist.

2. Form nach Anspruch 1, **dadurch gekennzeichnet, dass** die Formflächenmerkmale (11) des Reifens im Wesentlichen an der Verbindungsstelle der Seitenplatte und des Ringes positioniert sind.

3. Form nach Anspruch 1, **dadurch gekennzeichnet, dass** die Formflächenmerkmale (11) des Reifens im Wesentlichen auf der gesamten Länge der Seitenplatte positioniert sind.

4. Form nach einem der Ansprüche 1 bis 3, wobei jedes Einsatzteil eine Formfläche (10a, 10b) aufweist, die geeignet ist, sich mit dem Reifen in Kontakt zu befinden, **dadurch gekennzeichnet, dass** wenigstens zwei Einsatzteile unterschiedliche Formflächenmerkmale aufweisen.

5. Form nach einem der Ansprüche 1 bis 4, **dadurch gekennzeichnet, dass** wenigstens ein Einsatzteil (9a) durch Lasersintern hergestellt ist, wobei dieses Einsatzteil alle Formflächenmerkmale (11) des Einsatzes (9) oder einen Teil davon aufweist.

6. Form nach einem der Ansprüche 1 bis 4, **dadurch gekennzeichnet, dass** wenigstens ein Einsatzteil (9a) aus Aluminiumguss hergestellt ist.

7. Form nach einem der Ansprüche 1 bis 6, **dadurch gekennzeichnet, dass** die Seitenplatte (5) eine durchgehende Öffnung (10) umfasst, die sich zwischen dem Einsatz (9) und der Außenseite der Seitenplatte (5) erstreckt.

## Claims

1. Mould (1) for vulcanizing and moulding a tyre, this tyre comprising a tread delimited by two sidewalls, the mould comprising a ring (3) intended for moulding the patterns of the tread of the tyre and two shells (5), separate from the ring, for moulding the sidewalls, the mould comprising an annular groove (7) extending in a recessed manner in one of the shells (5) and an insert (9) housed in the groove, this insert (9) having tyre-moulding surface features (11), said moulding surface features of the insert comprise tyre tread pattern elements extending in line with the patterns of the tread, **characterized in that** the insert (9) is formed from a plurality of insert parts (9a-9h) that are positioned one after another in the annular groove (7), each insert part having contact surfaces (13) for contact with adjacent insert parts, and **in that** at least two insert parts (9e, 9f) are connected together in a region (15) of their contact surface, this connection being able to be broken in order to separate the two insert parts (9e, 9f).

2. Mould according to Claim 1, **characterized in that** the tyre-moulding surface features (11) are positioned substantially at the junction between the shell and the ring.

3. Mould according to Claim 1, **characterized in that** the tyre-moulding surface features (11) are positioned substantially along the entire length of the shell.

4. Mould according to any of claims 1 to 3, wherein each insert part has a moulding surface (10a, 10b) able to be in contact with the tyre, **characterized in that** at least two insert parts have different moulding surface features.

5. Mould according to one of Claims 1 to 4, **characterized in that** at least one insert part (9a) is produced by laser sintering, said insert part having all or part of the moulding surface features (11) of the insert (9).

6. Mould according to one of Claims 1 to 4, **characterized in that** at least one insert part (9a) is produced from cast aluminium.

7. Mould according to any one of Claims 1 to 6, **characterized in that** the shell (5) comprises a through-opening (10) extending between the insert (9) and the outside of the shell (5).
